# NEW EUROPEAN PATENT SPECIFICATION

(11) **EP 1 373 363 B2**
(45) Date of publication and mention of the opposition decision: **15.01.2014**
(45) Mention of the grant of the patent: 15.08.2007
(21) Application number: 02720919.6
(22) Date of filing: 22.02.2002
(51) Int. Cl.: C08G 65/336

(54) **MIXED ALKOXYSILYL FUNCTIONAL POLYMERS**
GEMISCHTE ALKOXYSILYL-FUNKTIONALISIERTE POLYMERE
POLYMERES FONCTIONNELS ALKOXYSILYLES MIXTES

(30) Priority: 23.02.2001 US 270599 P
(43) Date of publication of application: 02.01.2004
(73) Proprietor: Henkel AG & Co. KGaA, 40589 Düsseldorf (DE)
(72) Inventor: LIM, Thomas, F., Killingworth, CT 06419 (US); BACHON, Thomas, 40521 Dusseldorf (DE); BEUER, Bernd, 40789 Monheim (DE); KLEIN, Johann, 40593 Dusseldorf (DE)
(86) International application number: PCT/US2002/003398
(87) International publication number: WO 2002/068501

(56) References cited:
- EP-A- 0 293 733
- EP-A- 0 732 348
- EP-A- 1 035 170
- EP-A1- 0 918 062
- EP-A2- 1 041 101
- WO-A1-99/55755
- DE-A- 19 831 285

## Description

### BACKGROUND OF THE INVENTION

### Field Of the Invention

This invention relates to silylated polymers having mixed alkoxy groups on the silyl portion thereof, methods of their preparation, and compositions and reaction products formed therefrom. These alkoxysilylated polymers can be crosslinked when exposed to atmospheric moisture to become useful elastomers, sealants or adhesives. The presence of different alkoxy groups on the silicon atoms can control the cure speeds of these silylated polymers.

### Background of Related Technology

Alkoxysilylated polymers, in the presence of a catalyst, can be crosslinked by atmospheric moisture under ambient conditions. Compositions based on these type of polymers are often referred to as RTV sealants (or adhesives). The most well known example is RTV silicone sealants.

Crosslinking of alkoxysilylated polymers involves hydrolysis and condensation reactions of the alkoxylsilyl group. The cure speed of compositions prepared therefrom has conventionally been accelerated through the use of various types and amounts of moisture cure catalysts. However, among the disadvantages of using increased amounts of such catalysts to obtain greater cure speeds are potential instability, loss of shelf life and enhanced manufacturing and material costs of such compositions.

The smaller alkoxy groups, e.g. methoxy, are ordinarily more reactive and thus better able to be displaced by another chemical entity. Therefore, methoxy groups are more desirable for obtaining moisture curable polymers having faster and/or more controlled cure speeds. Currently, however, the starting materials for making many lower alkoxy group-containing polymers with a variety of backbones, such as polyethers like polypropylene oxide ("PPO"), are not readily commercially available. For example, a desirable route for making silyl-terminated PPO polymers containing alkoxy groups might include reacting an isocyanatoalkyltrialkoxysilane with an hydroxy terminated PPO. However, presently trimethoxysilyl-terminated isocyanatoalkyl compounds are not widely commercially available.

Thus, there is a need for a method of conveniently producing a moisture curable composition which includes a curable polymer having a mixture of different alkoxy groups present, at least one of which being a methoxy group, whereby controlled moisture cure speed is obtained.

### SUMMARY OF THE INVENTION

In accordance with the present invention, moisture cure speed can be controlled to proceed in a more or less rapid manner, depending on the identity and number of the alkoxy groups on the curable alkoxysilyl polymer. Methoxy and ethoxy groups are present concurrently on the silyl groups of the polymers of the present invention, though the methoxy groups provide more rapid cure.

One aspect of the invention relates to the presence of different alkoxy groups on the silicon atom of a silyl endcapped moisture curable polymer, whereby controlled cure speed of the moisture curable polymer is obtained. The presence of larger alkoxy groups, such as ethoxy or greater, slow down the cure while smaller alkoxy groups, such as methoxy, accelerate it. The overall cure speed is related to the type or combination of alkoxy group(s) or groups on the silicon. As noted above, the cure speed is faster if the alkoxy group is a better leaving group. Typically, a smaller alkoxy group is a better leaving group. For example, a methoxysilylated polymer cures faster than an ethoxysilylated polymer or a butoxysilylated polymer.

Specifically, in one aspect of the invention, there is included a reactive polymer having the structure: 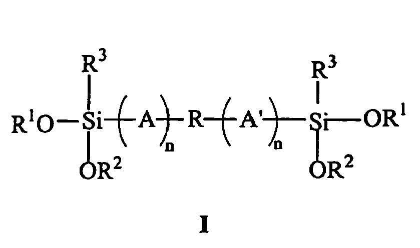 wherein R is a polyether diradical; A and A' may be each C₁₋₃₀ linear or branched, substituted or unsubstituted aliphatic groups or aromatic-containing groups, with or without interruption by a carboxy, carbamate, carbonate, ureido, urethane or sulfonate linkage; n may be 0 or 1; R¹ and R² may be each substituted or unsubstituted C₁₋₁₂ alkyl or aryl groups provided that R¹ and R² do not contain the same number of carbon atoms; R³ is a C₁₋₁₂ alkyl, alkenyl, alkoxy, aminoalkyl or aryl group, or a (meth)acryloxyalkyl group, wherein methoxy and ethoxy groups are concurrently present on the silyl groups of the polymer.

This polymer can be combined with a catalyst and other components to form a curable composition.

A further aspect of the invention includes a curable composition which includes:
(a) a curable polymer having the structure 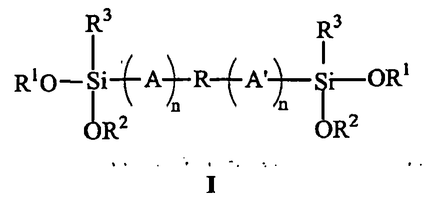 wherein R is a polyether diradical; A and A' may be each C₁₋₃₀ linear or branched, substituted or unsubstituted aliphatic groups or aromatic-containing groups, with or without interruption by a carboxy, carbamate, carbonate, ureido, urethane or sulfonate linkage; n may be 0 or 1; R¹ and R² may be each substituted or unsubstituted C₁₋₁₂ alkyl or aryl groups provided that R¹ and R² do not contain the same number of carbon atoms; R³ is a C₁₋₁₂ alkyl, alkenyl, alkoxy, aminoalkyl or aryl group, or a (meth)acryloxyalkyl group, wherein methoxy and ethoxy groups are concurrently present on the silyl groups of the polymer.
(b) a catalyst.

The alkoxysilyl terminated polymer of structure I contains more than one type of alkoxy group. Desirably, the alkoxy groups are at the terminal ends of the polymer, though pendant groups are also contemplated. The backbone of the polymer is a polyether. PPO is among the desirable backbones.

In still another aspect of the invention, there is provided an alkoxy silane exchange method or an alkoxy exchange method for preparation of a curable polymer of structure I as defined above which comprises mixing:
(a) a curable polymer having the structure: 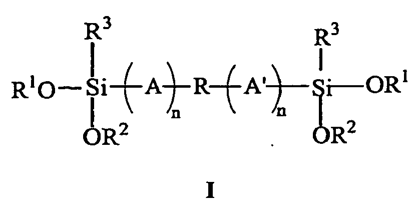 wherein R is a polyether diradical; A and A' may be each C₁₋₃₀ linear or branched, substituted or unsubstituted aliphatic groups or aromatic-containing groups, with or without interruption by a carboxy, carbamate, carbonate, ureido, urethane or sulfonate linkage; n may be 0 or 1; R¹ and R² may be each substituted or unsubstituted C₁₋₁₂ alkyl groups; and R³ is a C₁₋₁₂ alkyl, alkenyl, alkoxy, aminoalkyl or aryl group, or a (meth)acryloxyalkyl group;
(b) an alkoxy silane or an alcohol with the structure of R⁷OH, wherein R⁷ is an alkyl group; and;
(c) a catalyst.

Desirably, the alkoxysilane contains a methoxy group which exchanges with a higher carbon number alkoxy on the alkoxysilyl polymer. The resultant alkoxy exchange reaction desirably provides a mixture of different alkoxy groups, e.g. wherein R is a polyether diradical, with a second reactant having one end terminating with an isocyanate group and another end terminating with a silyl group having at least two alkoxy groups attached to a silicon atom thereof, and providing a third reactant, such as an alkoxy silane. An example of the first reactant is hydroxyl terminated PPO; an example of the second reactant is isocyanatopropyltriethoxy silane; and examples of the third reactant include methyltrimethoxy silane, methyltriethoxy silane, vinyltrimethoxy silane, vinyltriethoxy silane, and the like.

Alternatively, an organic alcohol terminated compound such as PPO terminated with OH groups, may be reacted with an isocyanatoalkyltrialkoxysilane, such as isocyanatopropyltriethoxysilane, in the presence of a catalyst such as a tin catalyst, or desirably a titanium alkylate such as titanium tetraisopropoxide, or a metal alkoxide such as sodium methoxide. The resultant composition provides a polymer which can then undergo alkoxy exchange when placed in the presence of a different alkoxy group such as a methoxysilane. This results in a mixed alkoxysilyl polymer composition having controlled, moderated or accelerated moisture cure speed.
The preparation of the mixed alkoxysilyl polymer can also be performed concurrently with the compounding of a moisture curable composition. For example, the polymer having at least one alkoxysilyl group, the alkoxysilane and the catalyst can be admixed with other components used to make the final moisture curable product. In this method, the alkoxy exchange occurs *in situ* in the final product without subjecting the controlled moisture curing reactive polymer *per se* to a pre-reaction or formation step prior to compounding.
Alternatively, a polymer having at least one alkoxysilyl group may be mixed with an alcohol in the presence of a catalyst. The mixture is then aged at ambient temperature or elevated temperature to permit alkoxy exchange, thereby forming a mixed alkoxysilyl-containing reactive polymer.

### DETAILED DESCRIPTION OF THE INVENTION

The invention relates to mixed alkoxysilyl polymers, curable polymers and compositions made therefrom.

The present invention recognizes that the cure speeds of polymers can be manipulated by putting different alkoxy groups on the silyl end groups of polymers encapped therewith. Cure speeds decrease in the order of MeO > EtO and higher.

Curable polymers made and used in accordance with the present invention are those having the structure: 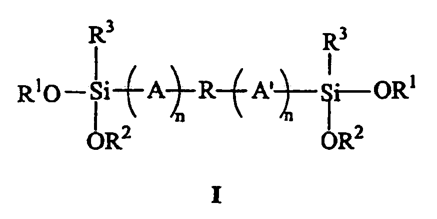 wherein R is a polyether diradical; A and A' may be each C₁₋₃₀ linear or branched, substituted or unsubstituted aliphatic groups or aromatic-containing groups, with or without interruption by a carboxy, carbamate, carbonate, ureido, urethane or sulfonate linkage; n may be 0 or 1; R¹ and R² may be each substituted or unsubstituted C₁₋₁₂ alkyl or aryl groups provided that R¹ and R² do not contain the same number of carbon atoms; R³ is a C₁₋₁₂ alkyl, alkenyl, alkoxy, aminoalkyl or aryl group, or a (meth)acryloxyalkyl group, wherein methoxy and ethoxy groups are concurrently present on the silyl groups of the polymer.

Additional examples of R backbones include polyoxymethylene (homopolymers and copolymers), polyethylene oxide ("PEO"), PPO and polyTHF.

The curable polymers of the present invention desirably have a viscosity in the range of about 10 cps to about 1,000,000 cps and more desirably about 1,000 cps to about 100,000 cps.

The invention further includes allcoxysilyl polymers and polymer compositions, and methods of preparing same through an alkoxy exchange reaction. One method of the present invention includes mixing a composition which includes:
(a) a polymer within structure I, wherein R is a polyether diradical; A and A' may be each C₁₋₃₀ linear or branched, substituted or unsubstituted aliphatic groups or aromatic-containing groups, with or without interruption by a carboxy, carbamate, carbonate, ureido, urethane or sulfonate linkage; n may be 0 or 1; R¹ and R² may be each substituted or unsubstituted C₁₋₁₂ alkyl groups; and R³ is a C₁₋₁₂ alkyl, alkenyl, alkoxy, aminoalkyl or aryl group, or a (meth)acryloxyalkyl group,
(b) an alkoxysilane in a sufficient amount to permit alkoxy exchange with the alkoxysilyl groups of structure I, and
(c) a catalyst,
wherein after alkoxy exchange occurs, R¹ and R² do not contain the same number of carbon atoms and , wherein methoxy and ethoxy groups are concurrently present on the silyl groups of the polymer.

This invention includes the composition based on the mixed alkoxysilyl polymer formed from mixing components (a), (b) and (c).

Component (a) may be chosen from a wide variety of reactive polymers, as set forth herein.

In structure I, linkage A between the alkoxysilyl group and the polymer backbone R is desirably resistant to common chemicals such as water, solvents, and mild acids and bases. Linkage A is intended to be a stable linkage. Linkage A may optionally be present in cases where R is terminated with appropriate atoms, such as O, to ensure a stable bond with the terminal alkoxysilyl groups. Particularly desirable examples of A include C₁₋₄ alkylene linkages, such as ethylene or propylene. Other particularly desirable examples of A include those having carboxy, carbonate, carbamate, ureido, urethane or sulfonate linkage contained within. When including these groups, A is desirably attached to the terminal silyl group by a branched liner, substituted or unsubstituted, aliphatic, cycloaliphatic or aromatic group in order to improve stability of the spacer. Examples of such A groups include:
moisture curing the formed reactive polymers, when used in the preparation of such reactive polymers residual catalyst from their manufacture may result in poor shelf life and instability in the final curable composition. It has been discovered that a further advantage of the present invention may be captured when catalysts, such as titanium catalysts including titanium tetraisopropoxide, or metal alkoxide catalysts such as sodium methoxide are employed. The aforementioned catalysts are easily quenched subsequent to the formation of the reactive polymer, thereby preventing active residue catalyst from causing premature curing. Additionally, titanium tetraisopropoxide is a particularly useful catalyst for enhancing the rate of the transesterification reaction, though a less efficient condensation catalyst. This allows for the enhanced rate of formation of the mixed alkoxy end groups without sacrificing stability. These catalysts are available commercially from E.I. DuPont de Nemours. Though the catalysts may be used in the range of about 0.01 to about 0.5%, desirably about 0.1 to about 0.3%, the catalysts (which are non tin based ones) have the added advantage of achieving similar cure speeds using smaller amounts of catalyst, e.g., about 0.1 to about 0.2% as compared with 0.5% (tin-based).

Another method of preparing mixed alkoxysilyl polumers as described above through an alkoxy exchange reaction includes mixing:
(a) a curable polymer having the structure I: 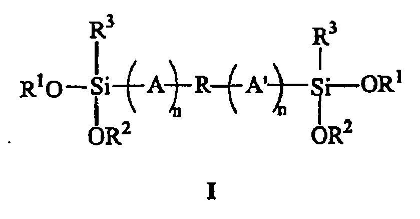 wherein R is a polyether diradical; A and A' may be each C₁₋₃₀ linear or branched, substituted or unsubstituted aliphatic groups or aromatic-containing groups, with or without interruption by a carboxy, carbamate, carbonate, ureido, urethane or sulfonate linkage; n may be 0 or 1; R¹ and R² may be each substituted or unsubstituted C₁₋₁₂ alkyl groups; and R³ is a C₁₋₁₂ alkyl, alkenyl, alkoxy, aminoalkyl or aryl group, or a (meth)acryloxyalkyl group;
(b) an alcohol; and
(c) a catalyst.

Component (b) is an alcohol with the structure of R⁷OH where R⁷ is an alkyl group.

According to this method of the present invention, the mixture of the three components, (a), (b) and (c), is aged at ambient temperature or at elevated temperatures. The resulting composition includes catalyst, polymer containing both R²O and R'O groups, and R²OH and R¹OH. The alcohols are removed by evaporation at various temperatures and under various pressures. This resulting composition cures by atmospheric moisture at a different speed from that of the original mixture. The difference in cure speed depends on the nature of the R²O and R¹O groups.

The invention also provides a method for the production of a cured polymer which comprises curing a composition comprising a polymer and a catalyst as described above. The identity and/or amount of the two or more different alkoxy groups of the polymer controls the cure speed of the alkoxy silyl functional polymer having two or more different alkoxy groups thereon.

The compositions in the present invention can include various other components useful in the manufacturing of moisture curable products. For example, various moisture catalysts, fillers, stabilizers, inhibitors, reactive diluents, viscosity modifiers and the like may be incorporated at useful ranges for their intended purposes.

It is known that triethoxysilane endcapped polypropylene oxide polymers moisture cure at much slower speeds than trimethoxysilane endcapped counterparts. The present invention seeks to provide a mixture of alkoxysilyl terminated polymers to control and desirably to accelerate the moisture curing capability of the resultant reactive polymers.

### EXAMPLES

### EXAMPLE 1

ViSi(OE)₃ was mixed with equal weight of ViSi(OMe) ₃ or MeOH in the presence of 1 % UL-45 (a tin catalyst from Witco). The silane compositions were monitored using ²⁹Si NMR spectroscopy. As seen from data set forth in Table 1, alkoxy exchange occurred.

**Table 1**

| **Alkoxy Exchange Reactions** | | | | | | | |
|---|---|---|---|---|---|---|---|
| | | | | **Mole Percent in Product Mixture** | | | |
| Sample No. | Composition* | Reaction time (min.) | Reaction (°C) T | VISI(OMe)₃ | VISI(OMe)₂OEt | VISI(OMe)(OEt)₂ | VISI(OEt)₃ |
| 1 | 50% ViSi(OEt)₃ + 50% ViSi(OMe)₃ | 30 | RT | 54.96 | 0.95 | 1.04 | 43.05 |
| 2 | 50% ViSi(OEt)₃ + 50% ViSi(OMe) ₃ | 60 | RT | 52.21 | 3.03 | 1.94 | 42.82 |
| 3 | 50% ViSi(OEt) ₃ + 50% ViSi(OMe) ₃ | 480 | RT | 46.79 | 8.86 | 6.16 | 38.19 |
| 4 | 50% ViSi(OEt) ₃ + 50% ViSi(OMe) ₃ | 1020 | RT | 40.99 | 16.17 | 9.79 | 33.05 |
| 5 | 50% ViSi(OEt) ₃ + 50% ViSi(OMe) ₃ | 3120 | RT | 25.6 | 32.28 | 18.91 | 19.21 |
| 6 | 50% ViSi(OEt) ₃ + 50% ViSi(OMe)₃ | 14400 | RT | 16.73 | 39.65 | 32.69 | 10.92 |
| 7 | 50% ViSi(OEt) ₃ + 50% ViSi(OMe)₃ | 60 | 80 | 27.61 | 32.16 | 18.81 | 21.43 |
| 8 | 50% ViSi(OEt)₃ +50% MeOH | 1440 | RT | 21.42 | 24.06 | 22.31 | 32.21 |
| 9 | 50% ViSi(OEt)₃ + 50% MeOH | 240 | 50 | 26.74 | 42.88 | 22.74 | 7.64 |

| | | | | | | | |
|---|---|---|---|---|---|---|---|
| * All samples contained 1 % of UL-45 (Sn catalyst). ViSi(OET)₃ is vinyl triethoxy silane. | | | | | | | |

### EXAMPLE 2

Polymer A (a triethoxysilylated polypropylene oxide) was prepared by heating a mixture of 400 grams ACCLAIM 4200 (a polypropylene oxide polymer with OH endgroups from Lyondell) with 52 grams SILQUEST A1310 (isocyanatopropyltriethoxy silane from Witco) in the presence of 1.5 grams UL-28 (a Sn catalyst from Witco) at 30-60 C for 3 hours. Sample Nos. 10-12 were prepared in this way with the amounts noted in Table 2a, with Sample No. 10 acting as a control. Mixture of Polymer A with UL-45 (a tin catalyst from Witco) and methoxysilanes were used in several NMR experiments. The results set forth in Table 2b indicate that extensive alkoxy exchange reactions occurred at the 50°C temperature and over the period of time in days noted.

**Table 2a**

| **Alkoxy Exchange Reactions** | | | |
|---|---|---|---|
| Component | Sample No./Wt.% | | |
| | 10 | 11 | 12 |
| Polymer A | 99.80 | 98.71 | 98.71 |
| UL-45 (Sn catalyst) | 0.20 | 020 | 020 |
| ViSi(MeO)₃ | | 1.10 | |
| Aminopropyltromethoxy Silane | | | 1.10 |
| Total | 100.00 | 100.00 | 100.00 |

**Table 2b**

| **Alkoxy Exchange Reactions** | | | | | | | | |
|---|---|---|---|---|---|---|---|---|
| | **Sample No/relative molar concentration** | | | | | | | |
| | **10** | **10** | **11** | **11** | **11** | **11** | **12** | **12** |
| Age at 50°C, days | 8 | 35 | 9 | 17 | 22 | 44 | 18 | 43 |
| (EtO)₃Si - capped PPO | 1 | 1 | 1 | 1 | 1 | 1 | 1 | 1 |
| (EtO)₂(MeO)Si- capped PPO | | | 0.202 | 0.312 | 0.415 | 0.407 | 0.296 | 0.35 |
| (EtO)(MeO)₂Si - capped PPO | | | 0.054 | 0.048 | 0.069 | 0.063 | 0.03 | 0.039 |
| ViSi(MeO)₃* | | | 0 | 0 | 0 | 0 | | |
| ViSi(MeO)₂(EtO) | | | 0.088 | 0.023 | 0.053 | 0.053 | | |
| ViSi(MeO)(EtO)₂ | | | 0.091 | 0.064 | 0.103 | 0.125 | | |
| H₂NPrSi(MeO)₃* | | | | | | | 0 | 0 |
| H₂NPrSi(MeO)₂(EtO) | | | | | | | 0.031 | 0.092 |
| H₂NPrSi(MeO)(EtO)₂ | | | | | | | 0.172 | 0.393 |

| | | | | | | | | |
|---|---|---|---|---|---|---|---|---|
| *consumed during reaction | | | | | | | | |

### EXAMPLE 3

Polymer B (a triethoxysilylated polypropylene oxide) was prepared by heating a mixture of 450 grams ACCLAIM 12200 (a polypropylene oxide polymer with OH endgroups from Lyondell) with 20.2 grams SILQUEST A1310 (isocyanatopropyltriethoxy silane from Witco) in the presence of 0.1 grams UL-28 (a tin catalyst from Witco) at 30-60°C for 3 hours.

Both Polymer A and Polymer B were used to prepare moisture curable compositions (Sample No. 13 - Sample No. 22 in Table 3a). Cure speeds of these compositions accelerated with time. The cure acceleration was observed to be faster at 50°C than at room temperature. Table 3b shows these and other observations of performance.

**Table 3a**

| **Cure Times of Aged Compositions (Effects of Alkoxy Exchange Reactions)** | | | | | | | | | | |
|---|---|---|---|---|---|---|---|---|---|---|
| **Components** | **Sample No./Wt. %** | | | | | | | | | |
| | **13** | **14** | **15** | **16** | **17** | **18** | **19** | **20** | **21** | **22** |
| Polymer B - (EtO)sSi PPO capped | | | | | | 99.26 | 98.77 | 98.28 | 98.77 | 98.28 |
| Polymer A - (EtO)₃Si PPO capped | 99.70 | 94.79 | 94.97 | 94.79 | 93.50 | | | | | |
| Sn catalyst | 0.30 | 0.47 | 0.28 | 0.47 | 0.50 | 0.50 | 0.49 | 0.49 | 0.49 | 0.49 |
| ViSi(MeO)₃ | 0.00 | 4.74 | 0.00 | 0.00 | 1.00 | | 0.49 | 0.98 | | |
| ViSi(EtO)₃ | | | | | | | | | 0.49 | 0.98 |
| NH₂PrSi(MeO)₃ | | | | | | 0.25 | 025% | 0.25 | 0.25 | 0.25 |
| MeOH | 0.00 | 0.00 | 4.75 | 4.74 | 5.00 | | | | | |

**Table 3b**

| **Cure Times of Aged Compositions** (**Effects of Alkoxy Exchange Reactions)** | | | | | | | | | | |
|---|---|---|---|---|---|---|---|---|---|---|
| **Physical Properties** | **Sample No**. | | | | | | | | | |
| | **13** | **14** | **15** | **16** | **17** | **18** | **19** | **20** | **21** | **22** |
| Aged Temperature, °C | RT | RT | RT | RT | RT | RT | RT | RT | RT | RT |
| Aged Time, days | 0 | 0 | 0 | 0 | 0 | 0 | 0 | 0 | 0 | 0 |
| Skin Over Time, min. | 480 | 1440 | 450 | 300 | 50 | 30 | 100 | 200 | 95 | 125 |
| Tack Free Time, min. | | | 1200 | 420 | 120 | 195 | 295 | 420 | 320 | 390 |
| Aged Temperature, °C | RT | RT | RT | RT | RT | RT | RT | RT | RT | RT |
| Aged Time, days | 1 | 1 | 1 | 1 | 1 | 1 | 1 | 1 | 1 | 1 |
| Skin Over Time, min. | 360 | 1440 | 360 | 120 | 50 | 25 | 88 | 180 | 80 | 100 |
| Tack Free Time, min. | 1440 | | | | 90 | 180 | 300 | 450 | 330 | 400 |
| Aged Temperature, °C | | | | | | 50 | 50 | 50 | 50 | 50 |
| Aged Time, days | | | | | | 1 | 1 | 1 | 1 | 1 |
| Skin Over Time, min. | | | | | | 25 | 45 | 65 | 68 | 100 |
| Tack Free time, min. | | | | | | 180 | 190 | 200 | 250 | 400 |
| Aged Temperature, °C | RT | RT | RT | RT | RT | RT | RT | RT | RT | RT |
| Aged Time, days | 69 | 69 | 69 | 69 | 69 | 3 | 3 | 3 | 3 | 3 |
| Skin Over Time, min. | 300 | 300 | 110 | 27 | 22 | 22 | 60 | 120 | 62 | 120 |
| Tack Free Time, min. | | | 255 | 60 | 75 | 130 | 140 | 300 | 150 | 280 |
| Aged Temperature, °C | | | | | | 50 | 50 | 50 | 50 | 50 |
| Aged Time, days | | | | | | 3 | 3 | 3 | 3 | 3 |
| Skin Over Time, min. | | | | | | 20 | 20 | 20 | 60 | 90 |
| Tack Free Time, min. | | | | | | 120 | 120 | 120 | 160 | 240 |

### EXAMPLE 4

Polymer C (a trimethoxysilylated polypropylene oxide) was prepared by heating a mixture of 914.4 grams ACCLAIM 12200 (a polypropylene oxide polymer with OH endgroups, available commercially from Lyondell) with 50.4 grams SILQUEST A1310 (isocyanatopropyltrimethoxy silane, available commercially from Witco) in the presence of 0.1 grams METATIN 740 (a tin catalyst from Acima) at 70-80°C for 1 hour.

Polymer C was used to prepare moisture curable compositions (Sample No. 23 - Sample No. 32 in Table 4a). Table 4b shows performance data for these samples.

**Table 4a**

| **Cure Times of Aged Compositions (Effect of Different Catalysts on Alkoxy Exchange Reactions)** | | | | | | | | | | |
|---|---|---|---|---|---|---|---|---|---|---|
| **Components** | **Sample No./Wt. %** | | | | | | | | | |
| | **23** | **24** | **25** | **26** | **27** | **28** | **29** | **30** | **31** | **32** |
| Polymer C - (EtO)₃Si PPO capped | 96.5 | 96.5 | 96.5 | 96.5 | 96.5 | 96.5 | 96.5 | 96.5 | 96.5 | 96.5 |
| Ti(OiPr)₄ catalyst | 0.3 | 0.3 | 0.3 | 0.3 | | | | | | |
| Sn catalyst | 0.2 | 0.2 | 0.2 | 0.2 | 0.5 | 0.5 | 0.5 | 0.5 | 0.5 | 0.5 |
| ViSi(OMe)₃ | 2.0 | 2.0 | 2.0 | 2.0 | 2.0 | 2.0 | 2.0 | 2.0 | 2.0 | 2.0 |
| NH₂NH₂CH₂NHPrSi(OMe)₃ | 1.0 | 1.0 | 1.0 | 1.0 | 1.0 | 1.0 | 1.0 | 1.0 | 1.0 | 1.0 |

**Table 4b**

| **Cure Times of Aged Compositions (Effect of Different Catalysts on Alkoxy Exchange Reactions)** | | | | | | | | | | |
|---|---|---|---|---|---|---|---|---|---|---|
| **Physical Properties** | **Sample No./Wt. %** | | | | | | | | | |
| | **23** | **24** | **25** | **26** | **27** | **28** | **29** | **30** | **31** | **32** |
| Aged Temperature, °C | RT | RT | 50 | 50 | RT | 50 | 50 | 50 | 50 | 50 |
| Aged Time, min. | 30 | 1440 | 120 | 240 | 1440 | 120 | 240 | 360 | 480 | 1440 |
| Skin Over Time, min. | 90 | 30 | 30 | 30 | 345 | 315 | 285 | 255 | 195 | 45 |

### EXAMPLE 5

Polymer D (a trimethoxysilylated polypropylene oxide) was prepared by heating a mixture of 920 grams ACCLAIM 12200 (a polypropylene oxide polymer with OH endgroups from Lyondell) with 44.9 grams SILQUEST Y5187 (isocyanatopropyltrimethoxysilane from Witco) in the presence of 0.1 grams METATIN 740 (a tin catalyst from Acima) at 70-80°C for 1 hour.

Both Polymer C and Polymer D were used to prepare moisture curable compositions (Sample No. 33 - Sample No. 37 in Table 5a). Cure speeds were detected after aging at 70°C. Before curing 0.2% Sn catalyst and 1% NH₂CH₂CH₂NHPrSi(OMe)₃ were added at room temperature. Table 5b shows performance data for these samples.

**Table 5a**

| **Cure Times of Aged Compositions (Effects of Alkoxy Exchange Reactions)** | | | | | |
|---|---|---|---|---|---|
| **Components** | **SampleNo./Wt.%** | | | | |
| | **33** | **34** | **35** | **36** | **37** |
| Polymer D - (MeO)₃Si PPO capped | | | | 98.00 | 97.80 |
| Polymer C - (EtO)₃Si PPO capped | 98.00 | 97.80 | 97.80 | | |
| Ti(OPr)₄ catalyst | | 0.2 | 0.2 | | 0.2 |
| ViSi(MeO)₃ | 2.00 | 2.00 | | 2.00 | 2.00 |
| ViSi(EtO) | | | 2.00 | | |

**Table 5b**

| **Cure Times of Aged Compositions (Effects of Alkoxy Exchange Reactions)** | | | | | |
|---|---|---|---|---|---|
| **Physical Properties** | **Sample No.** | | | | |
| | **33** | **34** | **35** | **36** | **37** |
| Aged Temperature, °C | 70 | 70 | 70 | 70 | 70 |
| Aged Time, min. | 30 | 30 | 30 | 30 | 30 |
| Skin Over Time, min. | 180 | 20 | 150 | 10 | 10 |

## Claims

1. A curable polymer having the structure: 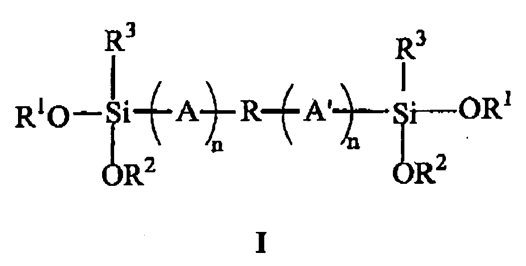 wherein R is a polyether diradical; A and A' may be each C₁₋₃₀ linear or branched, substituted or unsubstituted aliphatic groups or aromatic-containing groups, with or without interruption by a carboxy, carbamate, carbonate, ureido, urethane or sulfonate linkage; n may be 0 or 1; R¹ and R² may be each substituted or unsubstituted C₁₋₁₂ alkyl or aryl groups provided that R¹ and R² do not contain the same number of carbon atoms; R³ is a C₁₋₁₂ alkyl, alkenyl, alkoxy, aminoalkyl or aryl group, or a (meth)acryloxyalkyl group, wherein methoxy and ethoxy groups are concurrently present on the silyl groups of the polymer.

2. The polymer of claim 1, wherein R is polypropylene oxide.

3. The polymer of claim 1 or 2, wherein A is a propylene group.

4. The polymer of any of claims 1 to 3, wherein R² is methyl.

5. A curable composition comprising:
(a) a curable polymer as claimed in any of claims 1 to 4,
(b) a catalyst.

6. The composition of claim 5, wherein the catalyst is a transition metal complex.

7. The composition of claim 5, wherein the catalyst is selected from the group consisting of tin catalysts, titanium catalysts, metal alkoxide catalysts and combinations thereof.

8. The composition of claim 5, wherein the catalyst is selected from the group consisting of bases, acids, and quaternary salts.

9. The composition of claim 5, wherein the catalyst is selected from the group consisting of amines, phosphines, dialkyl tin dicarboxylates, the titanates, tetraalkylphosphonium salts, metal oxides, and carboxylic acids.

10. An alkoxy silane exchange method or an alkoxy exchange method for the preparation of a curable polymer according to any of claims 1 to 4 which comprises mixing:
(a) a curable polymer having the structure: 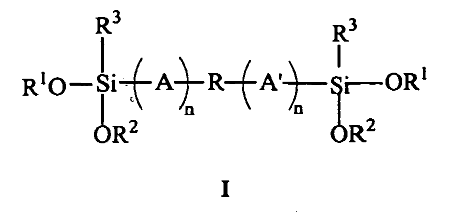 wherein R is a polyether diradical; A and A' may be each C₁₋₃₀ linear or branched, substituted or unsubstituted aliphatic groups or aromatic-containing groups, with or without interruption by a carboxy, carbamate, carbonate, ureido, urethane or sulfonate linkage; n may be 0 or 1; R¹ and R² may be each substituted or unsubstituted C₁₋₁₂ alkyl groups; and R³ is a C₁₋₁₂ alkyl, alkenyl, alkoxy, aminoalkyl or aryl group, or a (meth)acryloxyalkyl group;
(b) an alkoxy silane or an alcohol with the structure of R⁷OH, wherein R⁷ is an alkyl group; and
(c) a catalyst.

11. An alkoxy silane exchange method according to claim 10 wherein the catalyst is a titanium or metal alkoxide catalyst.

12. A method for the production of a cured polymer which comprises curing a composition according to any of claims 5 to 9.

## Patentansprüche

1. Härtbares Polymer mit folgender Struktur: 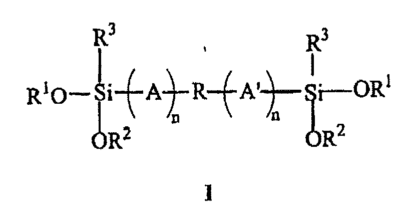 wobei R ein Polyether-Diradikal ist; A und A' jeweils unverzweigte oder verzweigte, substituierte oder unsubstituierte aliphatische C₁₋₃₀-Gruppen oder Aromaten enthaltende C₁₋₃₀-Gruppen mit oder ohne Unterbrechung durch eine Carboxy-, Carbamat-, Carbonat-, Ureido-, Urethan- oder Sulfonat-Verknüpfung sein können; n 0 oder 1 sein kann; R¹ und R² jeweils substituierte oder unsubstituierte C₁₋₁₂-Alkyl- oder -Arylgruppen sein können, vorausgesetzt, dass R¹ und R² nicht die gleiche Anzahl von Kohlenstoffatomen enthalten; R³ eine C₁₋₁₂-Alkyl-, -Alkenyl-, -Alkoxy-, -Aminoalkyl- oder - Arylgruppe oder eine (Meth)acryloxyalkylgruppe ist, wobei die Silylgruppen des Polymers gleichzeitig Methoxy- und Ethoxygruppen tragen.

2. Polymer nach Anspruch 1, wobei R Polypropylenoxid ist.

3. Polymer nach Anspruch 1 oder 2, wobei A eine Propylengruppe ist.

4. Polymer nach irgendeinem der Ansprüche 1 bis 3, wobei R² Methyl ist.

5. Härtbare Zusammensetzung umfassend:
(a) ein härtbares Polymer nach irgendeinem der Ansprüche 1 bis 4,
(b) einen Katalysator.

6. Zusammensetzung nach Anspruch 5, wobei der Katalysator ein Übergangsmetallkomplex ist.

7. Zusammensetzung nach Anspruch 5, wobei der Katalysator aus der Gruppe bestehend aus Zinn-Katalysatoren, Titan-Katalysatoren, Metallalkoxid-Katalysatoren und Kombinationen davon ausgewählt wird.

8. Zusammensetzung nach Anspruch 5, wobei der Katalysator aus der Gruppe bestehend aus Basen, Säuren und quartären Salzen ausgewählt wird.

9. Zusammensetzung nach Anspruch 5, wobei der Katalysator aus der Gruppe bestehend aus Aminen, Phosphinen, Dialkylzinndicarboxylaten, den Titanaten, Tetraalkylphosphonium-Salzen, Metalloxiden und Carbonsäuren ausgewählt wird.

10. Alkoxysilan-Austauschverfahren oder Alkoxy-Austauschverfahren zur Herstellung eines härtbaren Polymers nach irgendeinem der Ansprüche 1 bis 4, das das Mischen von Folgendem umfasst:
(a) einem härtbaren Polymer mit folgender Struktur: 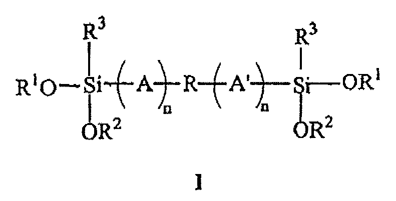 wobei R ein Polyether-Diradikal ist; A und A' jeweils unverzweigte oder verzweigte, substituierte oder unsubstituierte aliphatische C₁-₃₀-Gruppen oder Aromaten enthaltende C₁-₃₀-Gruppen mit oder ohne Unterbrechung durch eine Carboxy-, Carbamat-, Carbonat-, Ureido-, Urethan- oder Sulfonat-Verknüpfung sein können; n 0 oder 1 sein kann; R¹ und R² jeweils substituierte oder unsubstituierte C₁₋₁₂-Alkylgruppen sein können; und R³ eine C₁₋₁₂-Alkyl-, -Alkenyl-, -Alkoxy-, -Aminoalkyl-oder -Arylgruppe oder eine (Meth)acryloxyalkylgruppe ist;
(b) einem Alkoxysilan oder einem Alkohol mit der Struktur R⁷OH, wobei R⁷ eine Alkylgruppe ist; und
(c) einem Katalysator.

11. Alkoxysilan-Austauschverfahren nach Anspruch 10, wobei der Katalysator ein Titan- oder Metallalkoxid-Katalysator ist.

12. Verfahren zur Herstellung eines gehärteten Polymers, das die Härtung einer Zusammensetzung nach irgendeinem der Ansprüche 5 bis 9 umfasst.

## Revendications

1. Polymère durcissable possédant la structure : 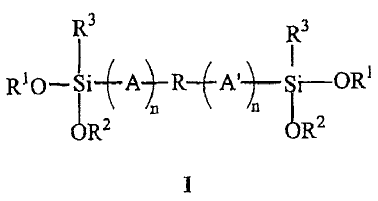 dans laquelle R représente un diradical polyéther; A et A' peuvent représenter chacun des groupes contenant des groupes aromatiques ou des groupes aliphatiques, substitués ou non substitués, linéaires ou ramifiés, en C₁ à C₃₀, avec ou sans interruption par une liaison, carboxy, carbamate, carbonate, uréido, uréthane ou sulfonate; n peut valoir 0 ou 1; R¹ et R² peuvent représenter chacun des groupes aryle ou alkyle en Ci à C₁₂, substitués ou non substitués, à condition que R¹ et R² ne contiennent pas le même nombre d'atomes de carbone; R³ représente un groupe alkyle, alcényle, alcoxy, aminoalkyle ou aryle en C₁ à C₁₂, ou un groupe (méth)acryloxyalkyle, dans lequel les groupes méthoxy et éthoxy sont simultanément présents sur les groupes silyle du polymère.

2. Polymère selon la revendication 1, dans lequel R représente un groupe poly(oxyde de propylène).

3. Polymère selon la revendication 1 ou 2, dans lequel A est un groupe propylène.

4. Polymère selon l'une quelconque des revendications 1 à 3, dans lequel R² représente un groupe méthyle.

5. Composition durcissable comprenant;
(a) un polymère durcissable selon l'une quelconque des revendications 1 à 4,
(b) un catalyseur.

6. Composition selon la revendication 5, dans laquelle le catalyseur est un complexe de métal de transition.

7. Composition selon la revendication 5, dans laquelle le catalyseur est choisi dans le groupe formé par les catalyseurs à l'étain, les catalyseurs au titane, les catalyseurs à alcoxyde métallique et leurs combinaisons.

8. Composition selon la revendication 5, dans laquelle le catalyseur est choisi dans le groupe formé par les bases, les acides, et les sels quaternaires.

9. Composition selon la revendication 5, dans laquelle le catalyseur est choisi dans le groupe formé par les amines, les phosphines, les dicarboxylates de dialkylétain, les titanates, les sels de tétraalkylphosphonium, les oxydes métalliques et les acides carboxyliques.

10. Procédé d'échange de groupe alcoxysilane ou procédé d'échange de groupe alcoxy destiné à la préparation d'un polymère durcissable selon l'une quelconque des revendications 1 à 4, qui comprend le mélange de :
(a) un polymère durcissable possédant la structure : 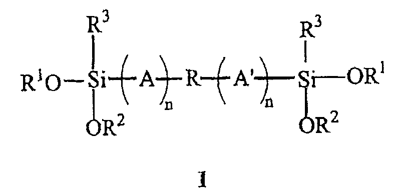 dans laquelle R représente un diradical polyéther; A et A' peuvent représenter chacun des groupes contenant des groupes aromatiques, des groupes aliphatiques, substitués ou non substitués, linéaires ou ramifiés, en C₁ à C₃₀, avec ou sans interruption par une liaison carboxy, carbamate, carbonate, uréido, uréthane ou sulfonate; n peut valoir 0 ou 1; R¹ et R² peuvent représenter chacun des groupes alkyle en C₁ à C₁₂, substitués ou non substitués, et R³ représente un groupe alkyle, alcényle, alcoxy, aminoalkyle ou aryle en C₁ à C₁₂, ou un groupe (méth)acryloxyalkyle.
(b) un alcoxysilane ou un alcool de structure R⁷OH, dans laquelle R⁷ représente un groupe alkyle; et
(c) un catalyseur.

11. Procédé d'échange de groupe alcoxysilane selon la revendication 10 dans lequel le catalyseur est un catalyseur au titane ou à alcoxyde métallique.

12. Procédé de production d'un polymère durci qui comprend le durcissement d'une composition selon l'une quelconque des revendications 5 à 9.
